# EUROPEAN PATENT APPLICATION

(11) **EP 4 786 405 A1**
(43) Date of publication of application: **05.08.2026**
(21) Application number: 25155150.3
(22) Date of filing: 31.01.2025
(51) Int. Cl.: B67D 1/00, B01F 23/236, A23L 2/52, A23L 2/54, A47B 77/08, A47B 77/10, A47B 88/00

(54) **CARBONATOR**

(71) Applicant: ritterwerk GmbH, 82194 Gröbenzell (DE)
(72) Inventor: Lapper, Thomas, 82290 Landsberied (DE)
(74) Representative: Hoffmann Eitle

(57) **Abstract**

The present invention relates to a carbonator (10) for mounting in a drawer (2), the carbonator (10) comprising a base (12) for being attached in the drawer (2), a housing (14) for accommodating a CO₂ cartridge along a longitudinal axis (15) of the housing (14), and an articulated joint (16) moveably attaching the housing (14) to the base (12), whereby the housing (14) is moveable relative to the base (12) between a rest position in which the longitudinal axis (15) has a first orientation and a use position in which the longitudinal axis (15) has a second orientation, perpendicular to the first orientation.

## Description

### Technical Field

The present disclosure relates to a carbonator, particularly a carbonator for carbonating liquid such as drinking water. Such carbonator may be intended for non-industrial use, e.g. use in a private household for example.

### Background

Known carbonators comprise a base for placing the carbonator on a horizontal surface such as a table, a counter top or a kitchen top. The carbonators further have a housing for accommodating a CO₂ cartridge and a holder for holding a receptable, such as a bottle, containing the to be carbonized liquid, e.g. the drinking water. Such carbonators are e.g. known from WO 2021/174307 A1 and EP 3 914 380 Bl.

As there is often not enough space in the kitchen for such appliances, they are either dispensed with altogether, stored in other place to be placed on the horizontal surface for use or placed in more impractical locations away from a tap, for example.

### Summary

In view of the above, it is an object of the present disclosure to provide a carbonator that may more easily be stored and used without accommodating space on a table, a counter top or a kitchen top.

The basic concept of the present disclosure is a carbonator that is configured for mounting in a drawer and has an articulated joint enabling the movement of the carbonator, more particularly its housing, between a rest position in which the drawer may be closed and the carbonator is stored in the drawer and a use position in which the carbonator may be used for carbonating liquid in a receptacle and in which the drawer may not be closed.

The carbonator of the present disclosure is defined in independent claim 1. Embodiments thereof are described in the dependent claims.

According to an aspect of the present disclosure, a carbonator for mounting in a drawer is suggested which comprises a base. The base is configured for being attached in the drawer. The base may for example be screwed to a bottom and/or side walls of the door. The base may also comprise more than one component of which one component is fixedly mounted to the drawer, whereas the other component is releasably and detachably connected to the one component as will be explained in more detail later.

The carbonator of the first aspect further comprises a housing for accommodating a CO₂ cartridge along a longitudinal axis of the housing. In this context, the longitudinal axis of the housing is to be understood as an axis along the longitudinal extension of the housing and with an inserted CO₂ cartridge congruent with the center axis of the CO₂ cartridge.

The CO₂ cartridge may be one with screw system (outer thread). For this purpose, the housing may comprise a mount (cartridge mount) having an inner thread for receiving the outer thread of the CO₂ cartridge. Alternatively, the CO₂ cartridge may be one with Quick Connect system such as that of the Soda Stream^{®} carbonators. In this instance, the mount may be configured to receive the Quick Connect CO₂ cartridges. The CO₂ cartridges may be 425g CO₂ cartridges. Yet, also other sizes are conceivable. The CO₂ cartridges may have a cylindrical shape with a center axis. The length along the center axis of a 425g CO₂ cartridge may be 365mm and the diameter of the cylindrical portion may be 60mm.

Moreover, an articulated joint is provided. The articulated joint moveably attaches or connects the housing to the base, whereby the housing is moveable relative to the base between a rest (or storage) position in which the carbonator may be stored in the drawer and a use position in which the carbonator may be used for carbonating liquid in a receptacle.

In the rest position, the longitudinal axis of the housing has a first orientation (x-axis direction). In normal use, the first orientation of the longitudinal axis will be approximately parallel to a bottom of the drawer and, hence, correspond to a horizontal orientation. In the use position, the longitudinal axis has a second orientation (y-axis direction), perpendicular to the first orientation. In other words, the housing will be in an upright position so that the second orientation corresponds to a vertical orientation.

Accordingly, the carbonator may easily be stored in the drawer and does not occupy any space on e.g. the kitchen top. At the same time, the carbonator may quickly be unfolded for use upon e.g. opening the drawer.

Moreover, the housing may have a holder for receiving a receptacle containing the liquid to be carbonated, such as a bottle. For example, the holder may be an inner thread engaging with an outer thread at the top of the receptacle.

A carbonating mechanism may also be accommodated in the housing for establishing a fluid communication between an outlet of the CO₂ cartridge and an inner space/volume of the receptacle for introducing gaseous CO₂ into the liquid contained in the receptacle for carbonating the liquid.

The articulated joint may in an aspect comprise a bearing and a shaft, the shaft being rotatably received by the bearing. According to this aspect, a center axis of the shaft is inclined to the longitudinal axis of the housing. As a result, the movement of the housing relative to the base between the rest position and the use position is a rotation in three dimensions. If the first orientation is an x-axis direction and the second orientation is a y-axis direction, the path of the rotational movement also has a component in a z-axis direction (the x-axis, Y axis and z-axis are each perpendicular to each other). The center axis of the shaft may in this context be inclined to a first plane defined by the first and second orientation (x-y plane) and at least one second plane perpendicular to the first plane (x-z plane and/or y-z plane).

For example, the housing of the carbonator, beside the movement (rotation) into the upright position, makes a rotation about its longitudinal. Hence, the carbonator may also be stored in relatively shallow drawers as it may in the rest position have been rotated so as to have a smallest height.

The bearing may for example be a ball bearing having an inner ring and an outer ring with a plurality of balls being sandwiched between the inner ring and the outer ring. The outer ring may be fixedly attached to the base and the shaft may be fixedly attached to the inner ring, for example press fitted into the inner ring.

According to a further aspect, the housing may be biased towards the use position. For example, a release button may be provided and upon pressing the release button, the housing automatically moves towards the use position. A spring, such as a torsion spring, may be used for biasing the housing towards use position.

Thus, moving the housing into the use position is assisted and the housing may be grasped more easily for finally moving it into the use position.

According to an aspect, the housing may further comprise an operating button for operating a valve of a CO₂ cartridge accommodated in the housing. The operating button may be part of the carbonating mechanism mentioned above. Further, a locking member releasably locking the operating button and a release mechanism for releasing the operating button when the housing is positioned in the use position may be provided.

As a result, the valve of the CO₂ cartridge can only be operated, i.e. opened, once the housing is positioned in the use position and the CO₂ cartridge is, hence, vertically orientated. Thus, one may reliably prevent liquid CO₂ from leaving the CO₂ cartridge.

The release mechanism may comprise a rod slidably guided in the housing and a cam comprised by the base, wherein the cam is, in the use position of the housing, engaged with a first end of the rod so that an opposite second end of the rod cooperates with the locking member for releasing the operating button. In other words, the rod functions as cam follower. Upon movement of the housing into the use position the cam of the base engages the rod as the cam follower and translationally moves the rod along its guide in the housing to directly or indirectly cooperate with the locking member for releasing the operating button. For example, the locking member may be a lever engaged with the operating button for locking the operating button and thereby prevent its operation. The rod may contact a portion of the lever and upon its translational movement during movement of the housing into the use position rotate the lever to disengage with the operating bottom and thereby release the operating button to allow its operation.

In an example, the locking member may be biased towards a locking position locking the operating button. A spring may be used to bias the locking member towards the locking position.

According to a further aspect, the carbonator may further comprise a drip pan. A drip pan may be necessary to potentially collect liquid escaping during the carbonating process. In this aspect, the drip pan is rotatably mounted to the base and is rotatable about an axis parallel to the second orientation, e.g. a vertical orientation, so as to be rotatable between an operational position and a storage position.

As a result, the drip pan can be arranged beside the housing and the overall height of the carbonator in the rest position may be kept low.

The drip pan may be biased, e.g. by means of a spring, about the axis of rotation towards one of the operational position and the storage position and configured to be engaged by the housing for being forced by the housing towards the other of the storage position and the operational position during movement of the housing. As a result, the drip pan is upon movement of the housing between its rest position and its use position also automatically rotated between the storage position and the operational position.

Thus, no further or separate mechanisms for moving the drip pan between the storage position and the operational position are required.

According to an aspect, the carbonator may further comprise a locking mechanism releasably locking the housing in the rest position and/or the use position.

Thus, accidental movement of the housing during storage and/or use may be avoided.

The locking mechanism may comprise a translationally movable bolt biased towards and for locking engagement with an engagement hole.

Thus, in use, the bolt may snap into the engagement hole in the use or rest position. Two engagement holes may be provided, wherein the first engagement hole is associated to the rest position and a second engagement hole is associated to the use position. In other words, the bolt engages with the first engagement hole when the housing is in the rest position and with the second engagement hole when the housing is in the use position.

According to a further aspect, the carbonator may further comprise a damper for dampening final movement of the housing before reaching the use position. For this purpose, a linear damper or a rotational damper may be used.

As a result, the end movement of the housing is decelerated and damaging may be avoided.

According to an aspect, the housing may have a body and a cover mounted to the body, the cover including a mount for receiving a CO₂ cartridge. The amount may have an inner thread into which an outer thread of a CO₂ cartridge may be threaded. Alternatively and as previously described, the mound may be configured to receive a Quick Connect system of a CO₂ cartridge. The cover may additionally have the holder (cartridge amount) described above for receiving a receptacle, such as a bottle. Further, the cover may accommodate parts of such as the operating button and the locking member or even the entire carbonating mechanism.

As a result, exchanging the CO₂ cartridge is simple and easy.

The cover and the body may be releasably connected by means of a bayonet closure.

Thus, detaching and attaching the cover from and to the body is easy.

According to a further aspect and as previously mentioned, the base may further comprise a mount for being fixedly mounted in the drawer and a main body releasably attached to the mount, wherein the main body and the housing are moveably connected by the articulated joint.

Thus, the carbonator may easily be removed from the drawer for cleaning.

### Brief Description of the Drawings

An embodiment of the carbonator according to the present disclosure is shown in the accompanying drawings.
Figures 1A to C show a carbonator mounted in a drawer of a kitchen base cabinet in (A) a rest position, (B) an intermediate position and (C) a use position.
Figures 2A to C show different views of the carbonator in the rest position.
Figures 3A and B show different views of the carbonator in the intermediate position.
Figures 4A to C show different views of the carbonator in the use position.
Figures 5A and B show enlarged views of the carbonator in the (A) the intermediate position and (B) the use position.
Figures 6A to D show different views of the carbonator in the use position and with a housing being depicted transparent to allow visibility of inner mechanisms.
Figures 7A and B show enlarged views of the carbonator with respect to the connection of the cover and the body of the housing.

### Detailed Description

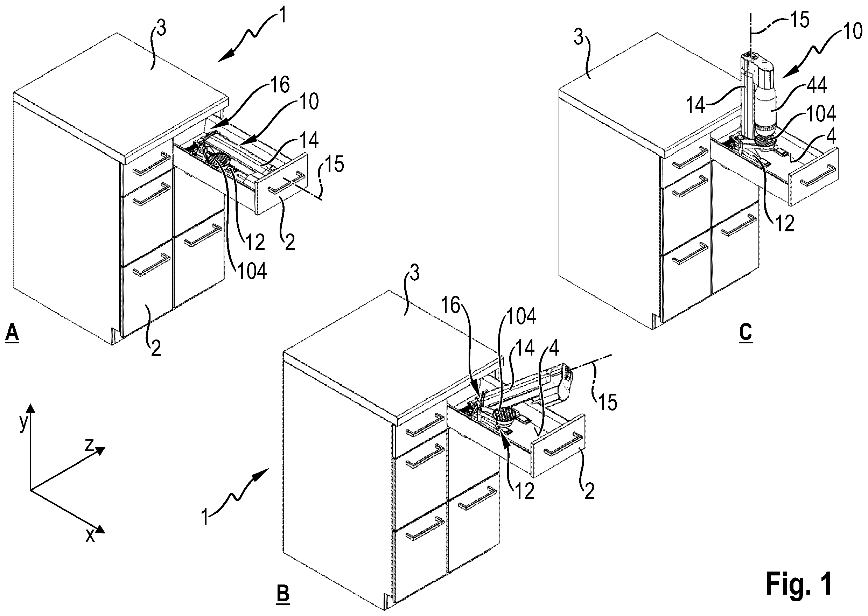

An embodiment of the carbonator according to the present disclosure is described in the following with reference to the accompanying drawings. In this context, the same reference numerals indicate the same elements throughout the specification. In addition, elements may sometime be omitted between different views to allow a view on other elements. Fig. 1 shows a kitchen base cabinet 1. The kitchen base cabinet 1 has a plurality of drawers 2 and a kitchen top 3. One of the drawers 2 is depicted in an open state.

A carbonator 10 according to an embodiment of the present disclosure is mounted in the open drawer 2.

The carbonator 10 comprises a base 12 and a housing 14. The base 12 and the housing 14 are movably attached to each other via an articulated joint 16. Due to the articulated joint 16, the housing may be moved from a rest position as shown in Fig. 1A via an intermediate position as shown in Fig. 1B into a use position as shown in Fig. 1C and vice versa. In the rest position, the housing 14 is arranged approximately parallel to the bottom 4 of the drawer 2. In other words, the housing 14 is lying in the drawer 2. In the use position, the housing 14 is arranged upright so that a liquid in a receptacle, such as a bottle 44, may be carbonated.

In the rest position, the longitudinal axis 15 of the housing 14 has a first orientation (x-axis direction). In normal use, the first orientation of the longitudinal axis 15 will be approximately parallel to a bottom 4 of the drawer 2 and, hence, correspond to a horizontal orientation. In the use position, the longitudinal axis 15 has a second orientation (y-axis direction), perpendicular to the first orientation.

In other words, the housing 24 will be in an upright position so that the second orientation corresponds to a vertical orientation.

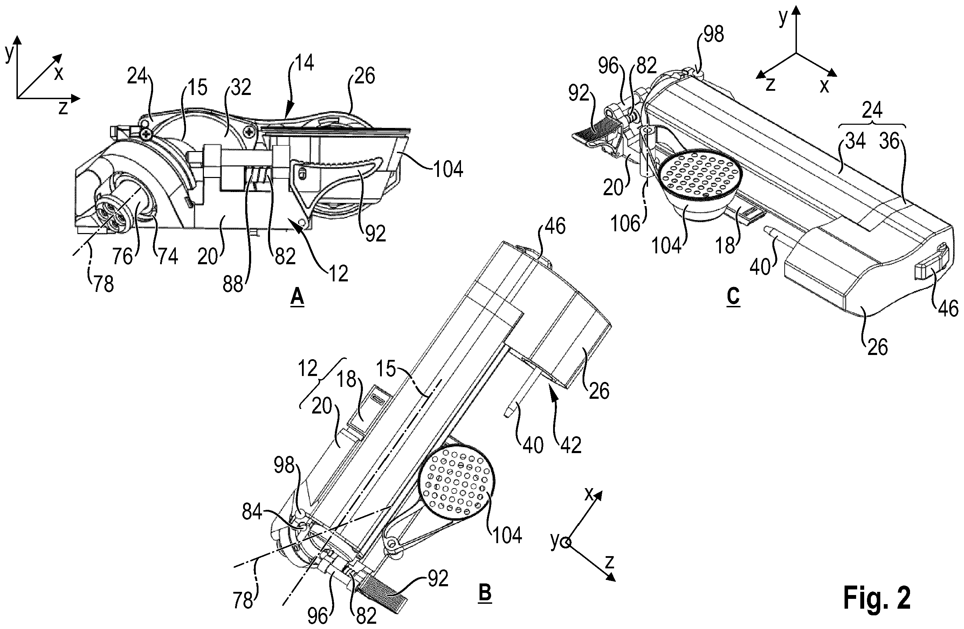

The articulated joint 16 comprises a bearing 74 (see Fig. 2A). In the present example, the bearing 74 is a ball bearing having an inner ring and an outer ring with a plurality of balls being interposed between the inner ring and the outer ring. The bearing 74 is fixed relative to the base 12, particularly its main body 20 (see later).

The articulated joint 16 further comprises a shaft 76. The shaft 76 is mounted to the housing 14 and particularly its bottom wall 32.

Further, the shaft 76 is rotatably received by the bearing 74. In case of a ball bearing as mentioned above, the outer ring may be fixedly attached to the base 12 and the shaft 76 may be fixedly attached to the inner ring, for example press fitted into the inner ring.

According to this embodiment, the shaft 76 and particularly its central axis 78 are angled relative to the longitudinal axis 15 of the housing 14 (see e.g. Fig. 2). As a result, the movement of the housing 14 relative to the base 12 between the rest position and the use position is a rotation in three dimensions. If the first orientation is an x-axis direction and the second orientation is a y-axis direction, the path of the rotational movement also has a component in a z-axis direction (the x-axis, Y axis and z-axis are each perpendicular to each other). In the final positions, i.e. the rest position and the use position, the longitudinal axis 15 of the housing 14 however resides in a common plane but the housing 14 assumes different orientations rotated about the longitudinal axis 15. In the example, the housing 14 is rotated about the longitudinal axis 15 by 90° between the rest position and the use position.

In the particular embodiment, the center axis 78 is angled relative to a horizontal plane (parallel to the bottom 4), i.e. the x-z plane and a vertical plane (parallel to sidewalls 5 of the drawer), i.e. the x-y plane and the y-z plane. Accordingly, the housing 14 may during its movement also be temporarily located outside the drawer 2 in a plan view on the drawer 2.

The base 12 is configured for being attached/fixed in the drawer 2. For this purpose, the base 12 may comprise a mount 18 and a main body 20. The mount 18 is fixedly mounted in the drawer 2, particularly to its bottom 4. In an example, the mount 18 is screwed to the bottom 4 of the drawer 2. The connection between the mount 18 and the main body 20 may be realized via a quick release fastener. As a result, the carbonator 10 may easily and quickly be removed from the drawer 2 for a cleaning of the drawer 2 and/or the carbonator 10. Also reinstalling the carbonator 10 afterwards is easy and quick.

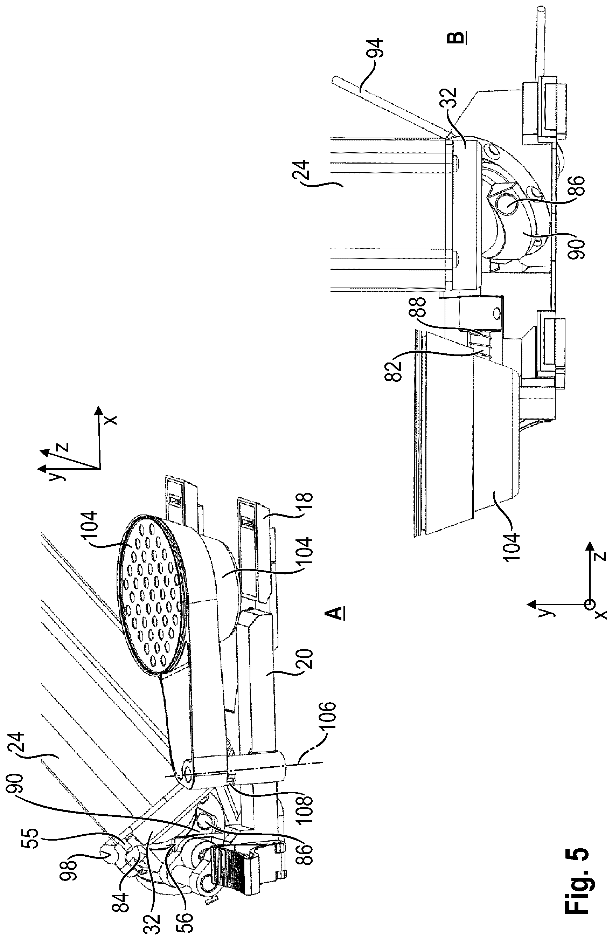

In order to prevent the housing 14 from moving towards the use position when the drawer 2 is closed and/or from moving towards the rest position during carbonating, a locking mechanism may be provided. The locking mechanism may comprise a slidable (translationally movable) bolt 82 and respective engagement holes 84 and 86 (see Fig. 5).

The bolt 82 may be comprised by the base 12. The bolt 82 may be by means of a spring 88 be biased towards a locking position. The engagement holes 84 and 86 may be comprised by the housing 14. In the particular embodiment, the housing 14 or particularly its bottom wall 32 has a partially circular sliding surface 90. The sliding surface 90 may be coaxial to the shaft 76. An engagement hole 86 for locking the housing 14 in the rest position and an engagement hole 84 for locking the housing 14 in the use position are respectively provided at respective ends of the sliding surface 90. A free end of the bolt 82 may be received by, that is engaged with, a respective one of the engagement holes 84, 86. Further, a release button 92 may be provided and cooperates with the bolt 82 so as to translationally move the bolt 82. In particular, for disengaging the free end of the bolt 82 with a respective engagement hole 84, 86, a user may operate the release button 92, whereby the free end of the bolt 82 is withdrawn from the respective engagement hole 84, 86 and the housing 14 may be moved between the use position and the rest position. During the movement of the housing 14, the free end of the bolt 82 slides along the sliding surface 90 or more concretely, the sliding surface 90, which moves together with the housing 14, slides on the free end of the bolt 82 until it is respectively received by the engagement holes 84, 86.

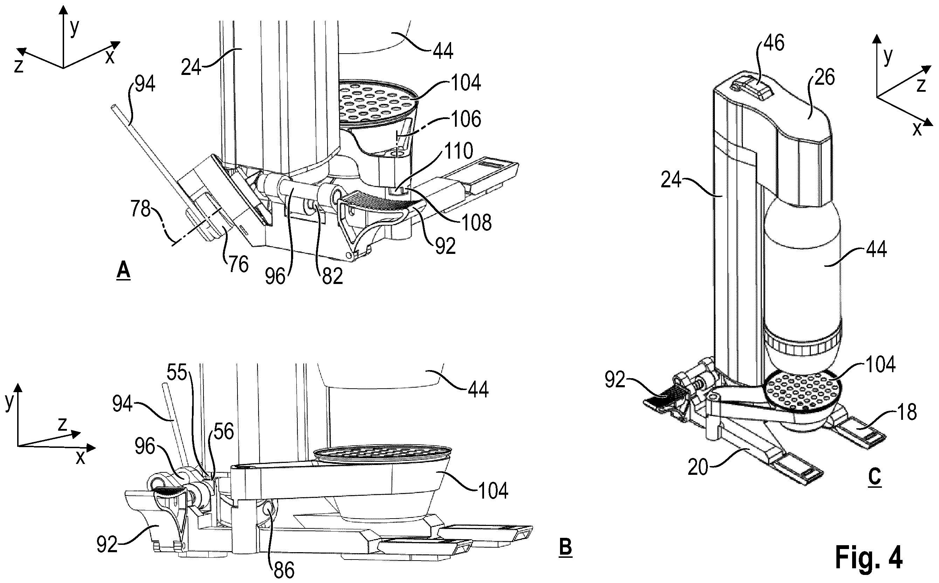

According to an example, a torsion spring 94 (see e.g. Fig. 4) may be provided coaxial to the shaft 76 and biasing the housing 14 towards the use position. In other words, when operating the release button 92 and disengaging the free end of the bolt 82 from the engagement hole 86, the housing 14 is automatically moved towards the use position by the torsion spring 94. Thus, a user may more easily grasp the housing 14 and completely move it towards the use position until the engagement hole 84 is engaged with the free end of the bolt 82. The torsion spring 94 may move the housing 14 to a potential angle between the horizontal plane and the longitudinal axis 15 of the housing 14 of about 30°. Other angles are, however, also conceivable.

Moreover, a damper 96 may be provided for dampening final movement of the housing 14 before reaching the use position. The damper 96 may be comprised by the base 12 and maybe a linear damper. Yet, also a rotational damper may be embodied in association with the articulated joint 16. In case of the linear damper 96, a counter surface 98 (see Fig. 2B and Fig. 5A)) may be comprised by the housing 14. Close to the end of the movement path of the housing 14 into the use position, the counter surface 98 comes into contact with the linear damper 96, thereby dampening the final movement of the housing 14 into the use position.

The carbonator 10 further comprises a drip pan 104. The drip pan 104 is rotatably mounted to the base 12 about an axis of rotation 106 between a storage position and an operational position. In the operational position, the drip pan 104 is located below the bottle 44 or the lancet 40 (see Fig. 4). The drip pan 104 may be circular in the plan view and, hence, be arranged coaxial to the bottle 44 or of the lancet 40.

The axis of rotation 106 is arranged outside the drip pan. Further, the axis of rotation 106 is oriented vertically and/or parallel to the longitudinal axis 15 of the housing 14 in the use position. The drip pan 104 may be biased towards its operational position by means of a nonvisible spring, such as a torsion spring. Furthermore, the movement range between the operational position and the storage position of the drip pan 104 may be limited. In a particular example, the drip pan 104 may have adjacent its axis of rotation 106 a limiting protrusion 108 engaging with a limiting groove 110 in the base 12. The limiting protrusion 108 moves within the limiting groove 110 when the drip pan 104 is moved between its operational position and its storage position. The limiting protrusion 108 is stopped at the respective ends of the limiting groove 110 in the respective end positions.

The housing 14 is configured for accommodating a CO₂ cartridge 22. The housing 14 comprises a body 24 and a cover 26.

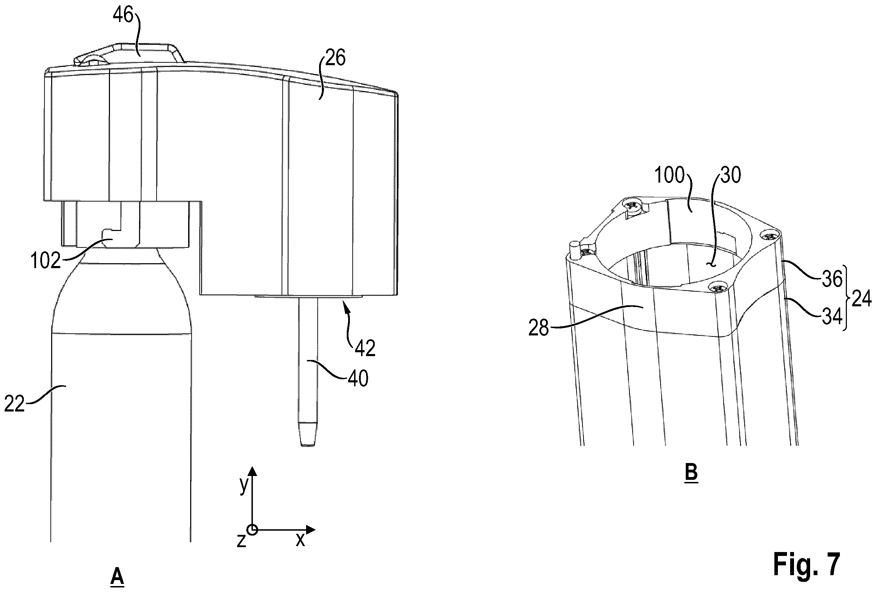

The body 24 primarily defines a hollow space 30 for accommodating the CO₂ cartridge 22 (see Fig. 7B). The body 24 may, thus, be generally cylindrical, however, with an almost rectangular cross-section. The hollow space 30 is defined by a circumferential sidewall 28 and at its lower end in the use position closed by the bottom wall 32. In an example, the body 24 may be configured by a lower part 34 made of an extruded aluminum profile and an upper part 36 configured for connecting/attaching the cover 26.

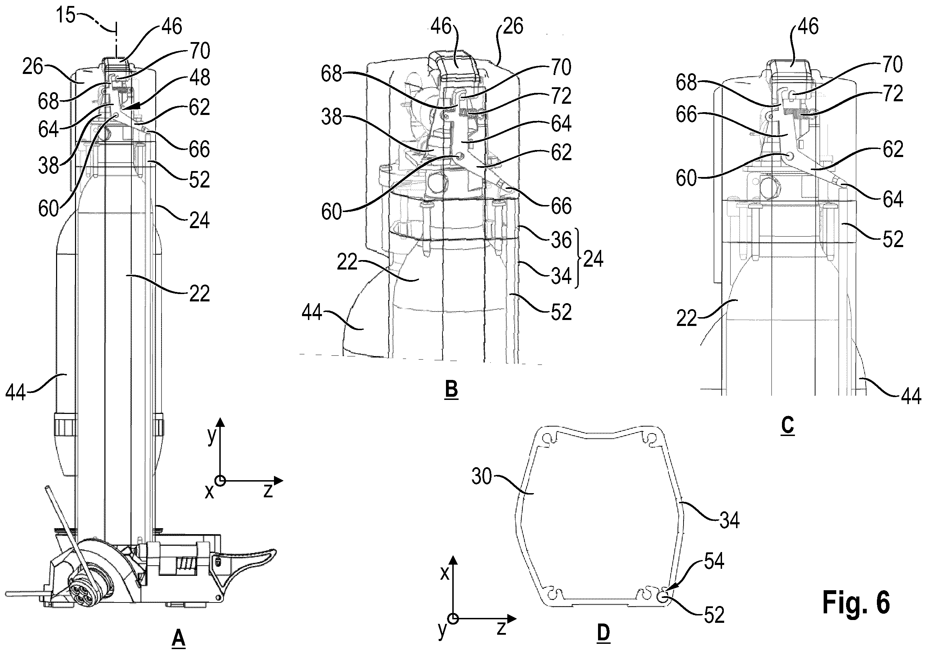

The cover 26 also accommodates the carbonating mechanism. The carbonating mechanism comprises a cartridge mount 38 (see Fig. 6A). The cartridge mount 38 has an inner thread for receiving the CO₂ cartridge 22, particularly an outer thread at the valve and of the CO₂ cartridge 22. In alternative embodiments, the mount may be configured for receiving a CO₂ cartridge 22 having a Quick Connect system.

Further, the cover 26 has a receptacle mount 42 (see Fig. 7A) for mounting a receptacle such as a bottle 44. The receptacle mount 42 may have an inner thread to which an outer thread of the bottle 44 may be threaded.

Furthermore, the carbonating mechanism comprises a lancet 40 for introducing CO₂ into a liquid in the bottle 44. The lancet 40 is in fluid communication, e.g. via tubes, with the cartridge mount 38.

Moreover, the carbonating mechanism comprises an operating button 46 for operating a valve of the CO₂ cartridge 22. Usually, a valve of a CO₂ cartridge 22 is opened by pressing a valve body towards the interior of the CO₂ cartridge 22 and there by lift the valve body from the valve seat so that CO₂ may exit the CO₂ cartridge 22. Accordingly and upon operation of the operating button 46, the valve of the CO₂ cartridge 22 is opened and CO₂ is fed via the lancet 40 into the liquid contained in the bottle 44. In particular, the operating button may be a tilting button, tiltable about a horizontal axis of rotation. At one end of the operating button 46 relative the horizontal axis of rotation, there is an operating member (not visible), such as a pin, which when the operating button 46 is operated engages with the valve of the CO₂ cartridge 22 as described above. At the opposite end of the operating button 46 relative to the horizontal axis of rotation, there is a protrusion 74 cooperating with a locking member 48 described later. The operating button 46 may be pressed by the valve of the CO₂ cartridge 22 towards a neutral position in which the operating button 46 is substantially horizontal.

In the shown embodiment, the carbonator 10 further comprises a safety mechanism for preventing the operating button from being operated when the carbonator 10 is in a position other than the use position, such as in the rest position and/or the intermediate position. By this safety mechanism, it may be prevented that liquid CO₂ may leave the CO₂ cartridge 22 and flow into e.g. the drawer 2.

The safety mechanism comprises a locking member 48 for releasably locking the operating button 46. The safety mechanism further comprises a release mechanism for releasing the operating button 46, e.g. for removing the locking member 48 between a locking position in which the operating button 46 is locked and a release position in which the operating button 46 is released. The locking member 48 is in the present embodiment configured as a lever rotatable about an axis of rotation 60. The axis of rotation 60 is oriented perpendicular to the longitudinal direction of the housing 14 and, thus, to a center axis of a mounted CO₂ cartridge 22. The lever has a first lever arm 62 and a second lever arm 64, which are angled relative to each other. The first lever arm 62 has a free end 66 and the second lever arm 64 has a hook 68. The operating button 46 has a protrusion 70. The protrusion 70 protrudes in a direction parallel to the axis of rotation 60 of the lever. Moreover, a spring 72 is provided for biasing the locking member 48, e.g. the lever, towards the locking position in which the operating button is locked (see Fig. 6B). In this locking position, the hook 68 engages with the protrusion 70 in order to lock the operating button 46.

In particular, the operating button 46 may in this position no longer rotate about the horizontal axis of rotation and thereby moved at its one end opposite to the end at which the protrusion 70 is arranged towards the valve of the CO₂ cartridge 22.

In the present embodiment, the release mechanism comprises a rod 52 slidably (translationally movable) guided in a guiding groove 54 of the housing 14 (see Fig. 6D), particularly the body 24 of the housing.

One end of the rod 52, i.e. the lower end 55 (first end) facing the base 12 in the use position of the housing, functions as a cam follower (see Fig. 4B and 5A). The release mechanism further comprises a horizontal surface 56 functioning as a cam. The horizontal surface 56 is part of and, hence, comprised by the base 12. As a result, the horizontal surface 56 is fixed relative to the base and, hence, the drawer 2. To the contrary, the rod 52 guided in the guiding groove 54 of the housing 14 moves together with the housing 14. Accordingly, the lower end 55 of the rod 52 may come into contact, i.e. engage with, the horizontal surface 56 upon movement of the housing 14 into its use position, whereby the rod 56 is moved along the guiding groove 54 away from the horizontal surface 56.

An upper end 58 (second end) of the rod 52, opposite to the lower end 55, cooperates with the locking member 48 in order to release the operating button 46. In particular, the upper end 58 engages with the free end 66 of the first lever arm 62, thereby rotating the lever around the axis of rotation 60, whereby the hook 68 is disengaged from the protrusion 70. In such a released state (see Fig. 6C), the operating button 46 may rotate about the horizontal axis of rotation and thereby moved at its one end opposite to the end at which the protrusion 70 is arranged towards the valve of the CO₂ cartridge 22 to open the valve.

The body 24 and the cover 26 are releasably connected for exchange of the CO₂ cartridge 22. In an example, a bayonet closure may be used for this connection. In particular, as shown in Fig. 7, the body 24 of the housing, particularly its upper part 36, has an L-shaped groove 100, whereas the cover 26 has a corresponding L-shaped protrusion 102. Hence, upon rotation of the cover 26 relative to the body 24, the bayonet closure may be open/closed. In the open state, the L-shaped protrusion 102 may be withdrawn from the L-shaped groove 100 and the cover 26 may be removed potentially together with an inserted CO₂ cartridge 22. Subsequently, the CO₂ cartridge 22 may be removed from the cartridge mount 38 and be replaced by a new CO₂ cartridge 22. Subsequently, the cover 26 with the exchanged CO₂ cartridge 22 may be inserted into the body 24, wherein the L-shaped protrusion 102 inserts into the L-shaped groove 100. Upon rotation in an opposite direction, the bayonet closure will be locked preventing the cover 26 from being removed from the body 24. Thus, exchange of CO₂ cartridge 22 is simple.

In the following, the function of the above carbonator 10 will be described.

First, the drawer 2 is fully opened. Subsequently, the release bottom 92 is pressed, whereby the bolt 82 is slid against the force of the spring 88 and bolt 82 is disengaged from the engagement hole 86. Once the bolt 82 is disengaged from the engagement hole 86, the housing 14 is automatically moved from its rest position towards the intermediate position by means of the torsion spring 94.

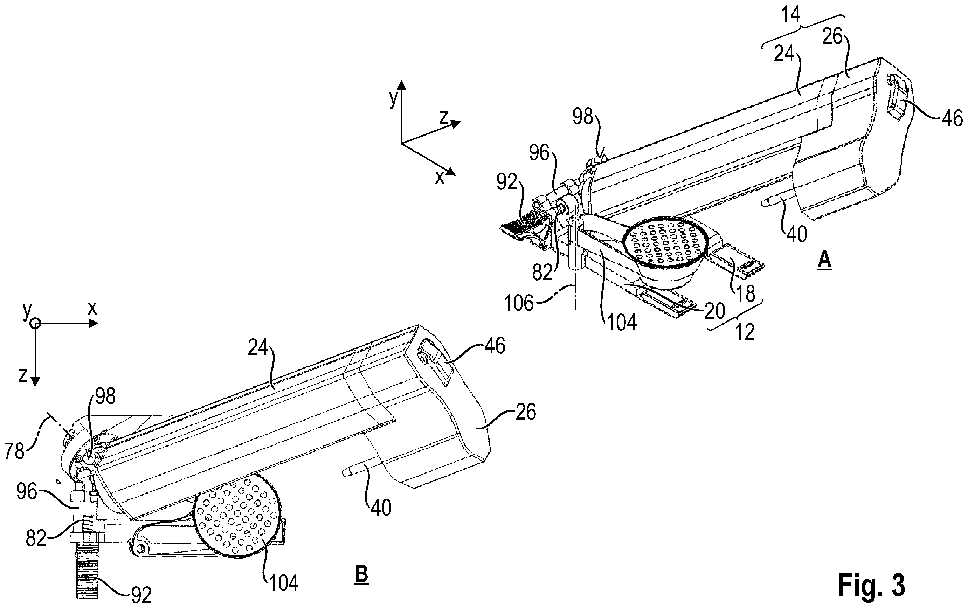

As will be apparent from Fig. 2B, the drip pan 104, more particularly an outer circumference of the drip pan 104, rests on the body 24 of the housing 14 in the rest position. When the housing 14 moves towards the use position, also the drip pan moves towards its operational position as will be apparent from a comparison of Figs. 3B and 4B by means of the not visible spring biasing the drip pan 104 towards the operational position.

In this intermediate position, a user may grasp the housing 14 and move it further towards the use position, whereby also the drip pan 104 moves further to its operational position.

Before the housing 14 reaches its use position, the counter surface 98 engages with the damper 96 whereby the final movement of the housing 14 and accordingly also that of the drip pan 104 being in contact with the housing 14 are dampened.

During the whole process, the sliding surface 90 slides on the free end of the bolt 82. In the use position, the bolt 82 is received by the engagement hole 84, thereby locking the housing 14 in the use position.

Further, a surface of the housing 14 facing the kitchen top 3 may come into contact with a front edge of the kitchen top 3. Due to the locking of the housing 14 in the use position by means of the bolt 82 and the engagement hole 84, that is the locking mechanism and the engagement of the housing 14 with the front face of the kitchen top 3, movement of the drawer 2 during use may be prevented.

Further, when the housing 14 is moved into the use position, the lower end 55 of the rod 52 comes into contact with the horizontal surface 56 whereby the rod 52 is moved upward. The upper end 58 of the rod 52 thereby cooperates with the free end 66 of the first lever arm 62, whereby the lever is rotated and the hook 68 of the second lever arm 64 disengages with the protrusion 70 of the operating button 46. Accordingly, the operating button 46 is released in the use position.

In the use position, a user may insert a bottle 44 into the receptacle mount 42, for example by screwing the outer thread of the bottle 44 into an inner thread of the receptacle mount 42. Subsequently, the operating button 46 is pressed, whereby the valve of the CO₂ cartridge 22 is opened and CO₂ is introduced into the liquid in the bottle 44, whereby the liquid is carbonated.

In order to move the carbonator 10 from the use position to the rest position, one has to again press the release button 92, whereby the bolt 82 is disengaged from the engagement hole 84 and may be manually moved towards the rest position. Close to the rest position, one will have to press the housing 14 into the rest position against the force of the torsion spring 94 until the bolt 82 engages with the engagement hole 86 and again locks the housing 14 in the rest position. In the rest position, the drawer 2 may again be closed and the carbonator 10 be stored.

During this process, the housing 14 engaging with the drip pan 104 will automatically press the drip pan 104 against the force of the spring from the operational position towards the storage position.

When leaving the use position, the lower end 55 of the rod 52 disengages with the horizontal surface 56, whereby the upper end 58 of the rod 52 disengages with the free end 66 of the first lever arm 62. Accordingly, the locking member 38 is rotated by the spring 72 about the axis of rotation 60, whereby the hook 68 engages with protrusion 70 and locks the operating button 46. Accordingly, accidental operation of the operating button 46 can be prevented. In addition, it is avoided that the valve of the CO₂ cartridge 22 is opened in a position of the housing 14 different than the use position, whereby liquid CO₂ can be prevented from being discharged.

## Claims

1. Carbonator (10) for mounting in a drawer (2), the carbonator (10) comprising:
a base (12) for being attached in the drawer (2),
a housing (14) for accommodating a CO₂ cartridge along a longitudinal axis (15) of the housing (14), and
an articulated joint (16) moveably attaching the housing (14) to the base (12), whereby the housing (14) is moveable relative to the base (12) between a rest position in which the longitudinal axis (15) has a first orientation and a use position in which the longitudinal axis (15) has a second orientation, perpendicular to the first orientation.

2. Carbonator according to claim 1, wherein the articulated joint (16) comprises a bearing (74) and a shaft (76), the shaft (76) being rotatably received by the bearing (74), wherein a center axis (78) of the shaft (76) is inclined to the longitudinal axis (15) of the housing (14).

3. Carbonator according to claim 2, wherein the housing (14) is biased towards the use position.

4. Carbonator according to any of the preceding claims, wherein the housing (14) further comprises:
an operating button (46) for operating a valve of a CO₂ cartridge (22) accommodated in the housing (4),
a locking member (48) releasably locking the operating button (46), and
a release mechanism (52, 56) for releasing the operating button (46) when the housing (14) is positioned in the use position.

5. Carbonator according to claim 4, wherein the release mechanism (52, 56) comprises
a rod (52) slidably guided in the housing (14);
a cam (56) comprised by the base (12), wherein the cam (56) is, in the use position of the housing (14), engaged with a first end (55) of the rod (52) so that an opposite second end (58) of the rod (52) cooperates with the locking member (48) for releasing the operating button (46).

6. Carbonator according to claim 4 or 5, wherein the locking member (48) is biased towards a locking position locking the operating button (46).

7. Carbonator according to any of the preceding claims, further comprising a drip pan (104), the drip pan (104) being rotatably mounted to the base (12) and being rotatable about an axis of rotation (106) parallel to the second orientation so as to be rotatable between an operational position and a storage position.

8. Carbonator according to claim 7, wherein the drip pan (104) is biased about the axis of rotation (106) towards one of the operational position and the storage position and configured to be engaged by the housing (14) for being forced by the housing (14) towards the other of the storage position and the operational position during movement of the housing (14) .

9. Carbonator according to any of the preceding claims, further comprising a locking mechanism releasably locking the housing in the rest position and/or the use position.

10. Carbonator according to claim 9, wherein the locking mechanism comprises a translationally movable bolt (82) biased towards and for locking engagement with an engagement hole (84, 86).

11. Carbonator according to any of the preceding claims, further comprising a damper (96) for dampening final movement of the housing before reaching the use position.

12. Carbonator according to any of the preceding claims, wherein the housing (14) has a body (24) and a cover (26) mounted to the body (24), the cover (26) including a cartridge mount (38) for receiving a CO₂ cartridge.

13. Carbonator according to claim 12, wherein the cover (26) and the body (24) are releasably connected by means of a bayonet closure (100, 102).

14. Carbonator according to any of the preceding claims, wherein the base comprises
a mount (18) for being fixedly mounted in the drawer (2), and
a main body (20) releasably attached to the mount (18), wherein the main body (20) and the housing (14) are moveably connected by the articulated joint (16).
